**Europäisches Patentamt**

**European Patent Office**

**Office européen des brevets**

(19)

(11) Veröffentlichungsnummer: **0 098 398**
A2

# (12) EUROPÄISCHE PATENTANMELDUNG

(21) Anmeldenummer: 83105605.6

(22) Anmeldetag: 08.06.83

(51) Int. Cl.³: **G 01 N 23/04**

(30) Priorität: **03.07.82 DE 3224964**

(43) Veröffentlichungstag der Anmeldung: **18.01.84**
**Patentblatt 84/3**

(84) Benannte Vertragsstaaten: **FR GB IT NL**

(71) Anmelder: **Sauerwein, Kurt, Dr., Bergische Strasse 16, D-5657 Haan 1 (DE)**

(72) Erfinder: **Sauerwein, Kurt, Dr., Bergische Strasse 16, D-5657 Haan 1 (DE)**
Erfinder: **Link, Rainer, Dr., Buchenhöhe 1, D-5159 Kerpen-Horrem (DE)**
Erfinder: **Nuding, Wolfgang, Dr., Am Gerstenkamp 8, D-5210 Troisdorf (DE)**

(74) Vertreter: **König, Reimar, Dr.-Ing. et al, Patentanwälte Dr.-Ing. Reimar König Dipl.-Ing. Klaus Bergen Wilhelm-Tell-Strasse 14 Postfach 260162, D-4000 Düsseldorf 1 (DE)**

(54) **Durchstrahlungsverfahren und -vorrichtung zum Materialprüfen.**

(57) Bei einem Durchstrahlungsverfahren und einer Vorrichtung zum Materialprüfen, insbesondere mit Gamma- oder Röntgenstrahlen wird eine unmittelbare Beobachtung der durchstrahlten Fläche und eine Speicherung der Durchstrahlungssignale unter Verzicht auf Fotoplatten durch die Verwendung von ortsauflösenden Strahlungsdetektoren (22) im Strahlengang von dem durchstrahlten Objekt (21) erreicht.

0098398

- 1 -    34 965 K

Dr. Kurt Sauerwein, Bergische Straße 16, 5657 Haan 1

"Durchstrahlungsverfahren und -vorrichtung zum Materialprüfen"

Die Erfindung betrifft ein Durchstrahlungsverfahren und
eine Vorrichtung zum Materialprüfen insbesondere mit
energiereichen Strahlen wie Gamma- oder Röntgenstrahlen.

Bei der Objektprüfung nach dem Durchstrahlungsverfahren
ist üblicherweise auf der einen Seite einer Probe ein
Strahler und auf der anderen Seite eine Fotoplatte angeordnet, die nach dem Durchstrahlen und Entwickeln ein
flächenhaftes Bild der durch das Objekt bedingten Strahlungsschwächung wiedergibt. Bei leichtdurchlässigen
Prüfkörpern können Lichtstrahlen, bei lichtundurchlässigen Proben müssen Gamma- oder Röntgenstrahlen verwendet
werden. Die zu durchstrahlenden Proben können aus anorganischem, organischem oder auch aus biologischem Material bestehen und unterschiedliche räumliche Konfigurationen und/oder variierende Strahlenabsorptionseigenschaften aufweisen; es kann sich also auch um lebende Objekte handeln.

Den zahlreichen bekannten Verfahren ist der Nachteil
einer relativ langen Durchstrahlungs- und vor allem Entwicklungszeit des Fotomaterials gemeinsam.

Der Erfindung liegt die Aufgabe zugrunde, bei einem Verfahren der eingangs genannten Art ein unmittelbares Beobachten der durchstrahlten Probe zu ermöglichen sowie
eine hierfür geeignete Vorrichtung zu schaffen. Die Lösung dieser Aufgabe basiert darauf, die bisher üblichen Fotoplatten durch ortsauflösende Strahlungsdetektoren zu ersetzen. Da Strahlungsdetektoren den Einfall des Energiequants unmittelbar zu einem elektrischen Signal verarbeiten, erübrigt sich einerseits das zeitraubende Entwickeln der bisher üblichen Fotoplatten, und es ist gleichzeitig möglich, das Ergebnis der Materialprüfung unmittelbar einer Datenbank zuzuführen.

Als ortsauflösende Strahlungsdetektoren kommen vor allem die nachfolgend beschriebenen Szintillationszähler, Halbleiterdetektoren und/oder Zählrohre und Funkenkammern in Betracht:

Bei diesen Strahlungsdetektoren wird die von verschiedenen Flächenelementen einer strahlenden Fläche ausgehende Strahlung mittels den einzelnen Flächenelementen zugeordneten Detektoren erfaßt. Um die Ortsauflösung, die sich hierbei aus dem gegenseitigen Abstand der Strahlungsdetektoren ergibt, zu verbessern, wird die von einem Flächenelement ausgehende Strahlung von einer größeren Detektorfläche erfaßt und nachfolgend durch spezielle Rechenoperationen der genaue Ort des Strahlungseinfalls am Detektorsystem bestimmt.

So sind z.B. die aus Hal O. Anger, Scintillation camera. The Review of Scientific Instruments, Vol. 29 (1958) pp. 27 - 33 bekannten ortsauflösenden Szintillationszähler an sich geeignet, bei denen die von einem strahlenden Körper ausgehenden Gammaquanten durch einen gitterförmigen Bleikollimator auf einen flächigen Einkristall aus thalliumaktiviertem Natriumjodid treffen und die durch die Gammaquanten dort ausgelösten Lichtquanten von mehreren - im Strahlengang nachgeordneten - Fotomultipliern erfaßt werden. Die auf die einzelnen Fotomultiplier entfallende Anzahl Lichtquanten ist, in Abhängigkeit vom Ort ihrer Entstehung im Einkristall, bei den einzelnen Multipliern unterschiedlich, so daß sich aufgrund einer statistischen Auswertung der Signalverteilung auf die einzelnen Multiplier der Ort des Einfalls der Gammaquanten derart berechnen läßt, daß die Ortsauflösung bis zu zehnmal genauer ist als der Mittenabstand der Multiplier.

Weiterhin geeignet sind Halbleiterstrahlungsdetektoren in Form von in Sperrichtung geschalteten p-n- oder hochreichen Halbleitern, bei denen ein einfallendes Gammaquant in der Sperrschicht Lochelektronpaare erzeugt, die Ladungen zu den Spannungspolen abfließen und dort ein Spannungssignal abgegriffen wird. Wenn die Halbleiterzonen und ihre zugehörigen aufgedampften Spannungskontakte eine streifenförmige Gestalt aufweisen, kann der Einfallsort eines Gammaquantes in bezug auf die Längsachse nach der Art eines Spannungsteilers bestimmt werden. Knoll, G.F.: Radiation detection and measurement, Wiley, New York (1979), S. 508-511. Auf diese Weise ergibt sich eine Ortsauflösung für einfallende Gammaquanten in einer Richtung. Eine flächenhafte Ortsauflösung ist möglich, wenn auf einen flächenhaften Halbleiterdetektor beidseitig parallele, voneinander getrennte Goldkontaktstreifen aufgedampft sind und sich die Richtungen der Kontaktstreifen auf den beiden Halbleiteroberflächen in einem Winkel von z.B. 90° kreuzen.

Zur linienhaften Ortsauflösung einfallender Gammaquanten eignen sich auch Zählrohre mit elektrischen Kontakten an beiden Seiten des Zähldrahtes. Dabei erzeugt ein einfallendes Gammaquant je einen Impuls an beiden Enden des Zähldrahtes, deren Laufzeiten proportional zu den zurückgelegten Zähldrahtstrecken sind. Aus der Differenzbildung beider Laufzeiten ergibt sich der Einfallsort des Gammaquants.

Bei den vorgenannten Verfahren zum ortsauflösenden Messen von Gammaquanten werden also eine Vielzahl von Einzelereignissen erfaßt und ausgewertet, was deshalb möglich ist, weil die von den einzelnen Flächenelementen einer selbststrahlenden Probe ausgehenden Gammaquanten im wesentlichen zu unterschiedlichen Zeiten emmitiert werden. Da nicht nur die Ortsauflösung sondern auch die Energieauflösung von Gammaquanten eine endliche Zeit erfordert, dürfen die Zählraten für die einzelnen Strahlungsdetektoren nicht allzu hoch sein. Man hat ortsauflösende Strahlungsdetektoren bisher nur in der Nuklearmedizin eingesetzt, wo sich mittels der in den menschlichen oder tierischen Körper eingeimpfte gammastrahlende Flüssigkeiten gewisse Körperpartien mit Hilfe ortsauflösender Strahlungsdetektoren, wie z.B. einer sogenannten Anger-Kamera, sichtbar machen lassen.

Überraschenderweise ist es nun erfindungsgemäß auch möglich, die vorbeschriebenen ortsauflösenden Strahlungsdetektoren für die Materialprüfung nach der Durchstrahlungsmethode zu verwenden. Bei dieser Methode geht also nicht - wie vorbekannt - die zu erfassende Strahlung von einem bestimmten Flächenelement des zu prüfenden Objektes aus, so daß lediglich die Ausgangsorte der Strahlungsereignisse zu lokalisieren sind, sondern es wird die Schwächung der die einzelnen Flächenelemente des Prüfkörpers durchdringenden Strahlung ortsaufgelöst ermittelt.

Eine relativ schnelle Materialprüfung wird daruch erreicht, daß ein entlang einer Koordinate einer durchstrahlten Fläche des Objekts die Strahlung streifenhaft ortsauflösender Strahlungsdetektor und das Objekt relativ zueinander in der anderen Koordinantenrichtung verschoben werden. Auf diese Weise wird jeweils ein ganzer Streifen der durchstrahlten Fläche auf einmal erfaßt, so daß zur Erfassung der anderen Koordinate lediglich die Probe im Strahlengang oder der Strahler samt dem Detektor relativ zur Probe verschoben zu werden braucht. In diesem Fall hält sich der elektronische Aufwand für die streifenhafte Ortsauflösung durch den Strahlungsdetektor in relativ engen Grenzen. Es ist jedoch auch möglich, einen zweidimensionalen ortsauflösenden Detektor zu verwenden, so daß eine zusätzliche Bewegung des Detektors zur flächenhaften Abbildung nicht erforderlich ist.

Eine besondere Erleichterung vor allem für Kontrollmessungen an dem zu prüfenden Material stellt die erfindungsgemäße Verarbeitung der Strahlungsdetektorsignale für eine bildliche Darstellung auf einem Sichtgerät dar; auf diese Weise lassen sich Material-, Verarbeitungs- oder sonstige Fehler besonders schnell erkennen.

Ein neues Feld der zerstörungsfreien Materialprüfung nach dem Durchstrahlungsverfahren eröffnet sich dadurch, daß die erfindungsgemäße Durchstrahlungsprüfung in mehreren Richtungen einer Ebene der Probe erfolgt und die Strahlungsdetektorsignale gemäß des Computer-Tomographie-Verfahrens ausgewertet werden. Auf diese Weise werden nicht nur Flächenelemente einer Probe unabhängig vom Schichtaufbau des einzelnen Flächenelementes untersucht, sondern es können sogar die einzelnen Volumenelemente innerhalb der Probe untersucht werden, insbesondere läßt sich eine dünne, beliebig in der Probe verlaufende Materialschicht auf sein Strahlungsschwächung hin untersuchen. Bisher war es lediglich möglich, relativ grob gerasterte Bilder vom Aufbau dünner Schichten zu erhalten, weil es aufgrund des hohen Zeitaufwandes für solche Messungen notwendig war, eine Vielzahl von Einzeldetektoren nebeneinander anzuordnen. Der Vorteil der erfindungsgemäßen ortsauflösenden Strahlungsdetektoren liegt darin, daß sich bei gleichem Zeitaufwand mit weniger oder nur einem ortsauflösenden Detektor eine verbesserte Ortsauflösung ergibt. Die Auswertung der Strahlungsdetektorsignale gemäß dem Computer-Tomographie-Verfahren ergibt sich z.B. aus "Bildgebende Systeme für die medizinische Diagnostik", Hsg. E. Kreske, Verlag Siemens AG, 1980, S. 265-365. Im wesentlichen wird bei diesem Verfahren eine Dünnschichtprobe durchstrahlt, wobei erfindungsgemäß ein Strahler und ein diesem fest zugeordneter streifenhaft ortsauflösender Strahlungsdetektor relativ zur Probe gedreht werden; dabei wird die Probe in verschiedenen Richtungen der Schicht durchstrahlt, und es ergibt sich für jede Winkelstellung zwischen der Probe in bezug auf den Strahler/Strahlungsdetektor eine Durchstrahlungsprojektion der Probe. Ein elektronischer Rechner verarbeitet die Durchstrahlungsprojektionen für jede Winkelstellung durch Logarithmierung, Faltungen und Entfaltungen in der aus der Computer-Tomographie bekannten Weise zu einem Schichtbild mit unterschiedlichen Schwächungswerten.

Die Erfindung wird nachfolgend anhand eines in der Zeichnung dargestellten Ausführungsbeispiels des näheren erläutert. In der Zeichnung zeigen:

Fig. 1   die schematische Darstellung eines ortsauflösen-
         den Szintillationszählerdetektors mit Signalaus-
         wertung,

Fig. 2   eine schematische Darstellung eines ortsauflösenden Halbleiterdetektors,

Fig. 3   ein Fließbild des Verfahrensablaufes bei einer
         Durchstrahlungsmessung,

Fig. 4   eine schematisch dargestellte Anordnung für die
         Durchstrahlung einer bestimmten Schicht nach dem
         Computer-Tomographie-Verfahren.

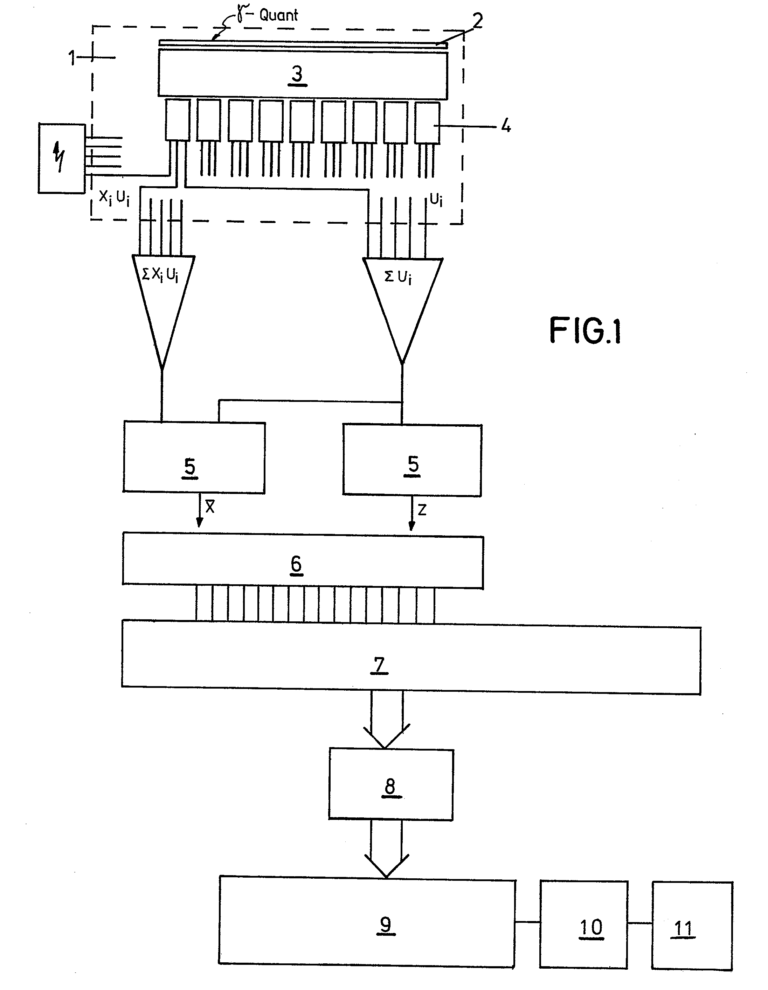

Bei dem erfindungsgemäß zu verwendenden ortsauflösenden
Szintillationsdetektor (Fig. 1) weist ein Detektor 1
einen flächigen Einkristall 2 aus thalliumaktiviertem
Natriumjodid oder anderem Szintillationskristall auf,
in dem ein einfallendes Gammaquant einen Lichtblitz erzeugt, dessen Lichtquanten mittels eines ebenfalls
flächigen Lichtleiters 3 mehreren dahinter angeordneten
Fotomultipliern 4 zugeführt werden. Eine den Fotomultipliern zugeordnete Auswerteelektronik 5 verarbeitet die
von den Fotomultipliern erhaltenen Signale folgendermaßen:

Wenn ein Gammaquant z.B. genau zwischen zwei Fotomultipliern einfällt, wird in den beiden benachbarten Fotomultipliern ein gleich hohes Spannungssignal $U_1 = U_2$
erzeugt. Durch Wichtung der Signale $U_1$, z.B. mit 1,
und $U_2$, z.B. mit 2, Addition beider Signale und Division
durch das Summensignal ergibt sich der Einfallsort:

$$X = \frac{1\ U_1 + 2\ U_2}{U_1 + U_2} = \frac{U_1 + 2\ U_1}{2\ U_1} = 3/2,$$

d.h. genau zwischen $x_1 = 1$ und $x_2 = 2$ (wobei $x_1$ und $x_2$ die Mitten der betroffenen Fotomultiplier bezeichnen). Die Summe aller Spannungssignale $U_i$, die durch den Einfall eines einzelnen Gammaquantes erzeugt werden ($\Sigma u_i$) entspricht der Energie des Gammaquants; dieses Summensignal (Energiesignal) kann von einem eventuellen Untergrundsignal mittels eines Diskriminators befreit werden, bevor es als Koinzidenzsignal weitergegeben wird. Somit liefert die Auswerteelektronik 5 für jedes einfallende Gammaquant eine Ortskoordinate X und ein Energiesignal z, die über einen Analog-Digital-Wandler (ADC 6) einer Adresse in einer Speichereinheit 7, z.B. einem Two Port Memory, zugeführt werden.

Bei streifenhaft ortsauflösenden Strahlungsdetektoren wird nur die X-Adresse erfaßt, während für flächenhaft ortsauflösende Strahlungsdetektoren auch die Y-Ortskoordinate zu bestimmen ist. Die gespeicherten Adressen jedes errechneten Ortes entsprechen also den ermittelten Ortskoordinaten X und gegebenenfalls Y. Es sind dabei mindestens so viele Ortsadressen vorgesehen, wie es der bestmöglichen Ortsauflösung entspricht. In einem Integrator 8 werden alle Signale, die während der Meßzeit einer bestimmten Adresse zugeordnet werden, aufaddiert. Ein Elektronenrechner 9 normiert alle aufaddierten Signale und führt sie einem Bildverarbeitungssystem 10 zu, an das ein Monitor 11 zur Darstellung der durchstrahlten Fläche angeschlossen ist.

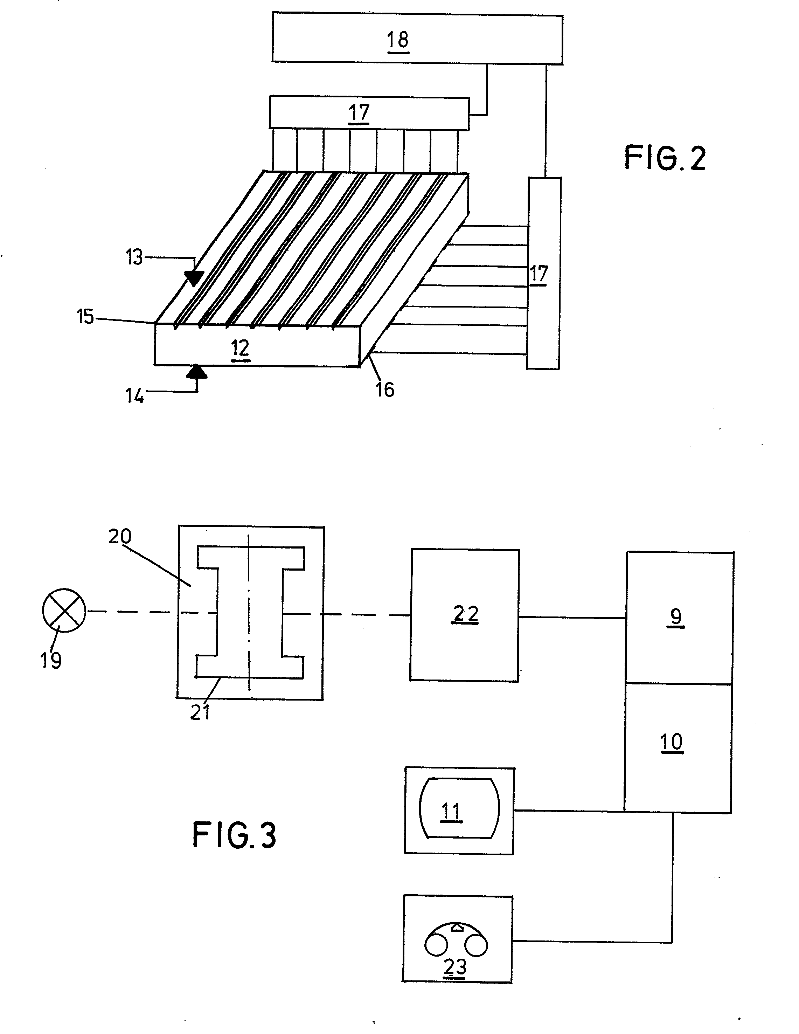

Ein ortsauflösender Halbleiterdetektor (Fig. 2) besteht aus einem hochreinen oder p-n dotierten Halbleiter 12 mit einem Trägermaterial z.B. aus Germanium oder Silizium. Die Oberflächen 13 und 14 des Halbleiterkristalls sind mit streifenförmig aufgedampften Goldkontakten 15, 16 derart versehen, daß die Streifen beider Oberflächen im rechten Winkel zueinander angeordnet sind. Ein einfallendes Gammaquant erzeugt in der ladungsarmen Schicht eines unter Spannung stehenden Halbleiters Ladungsträger, welche durch die an die Goldkontakte angelegte Hochspannung abgesaugt werden. Die Goldkontaktstreifen weisen jeweils an einem Ende eine elektrisch leitende Verbindung mit einem Auswertenetzwerk 17 auf; sie besitzen die Funktion von Spannungsteilern, so daß das Auswertenetzwerk sowohl ein Orts- als auch ein Energiesignal liefert. Die sich anschließende Elektronik 18 ist im übrigen die gleiche wie im Zusammenhang mit Fig. 1 erläutert.

Bei dem Versuchsaufbau gemäß Fig. 3 sendet eine Strahlungsquelle 19 die zur Durchstrahlung einer Probe 21 erforderliche Strahlung aus. Bei Proben mit hoher Flächendichte eignen sich beispielsweise Strahlungsquellen mit einer Energie von 100 keV bis 1,5 MeV oder auch Strahlen aus Beschleunigeranlagen mit Energien bis zu 30 MeV; Besonders geeignet sind Cobalt-60-Strahler, die eine energiereiche Gammastrahlung emittieren. Die Strahler werden entsprechend der Flächendichte des Objektes beim Durchstrahlen abgeschwächt und treffen auf einen ortsauflösenden Strahlungsdetektor 22, wie er z.B. im Zusammenhang mit den Fig. 1 oder 2 beschrieben wurde, der also eine flächenhafte Abbildung der Strahlungsintensität ermöglicht und die Ergebnisse an einen Elektronenrechner 9 mit nachgeschaltetem Bildverarbeitungssystem 10 mit einem Monitor 11 oder zur Speicherung durch einen Datenspeicher 23 weitergibt.

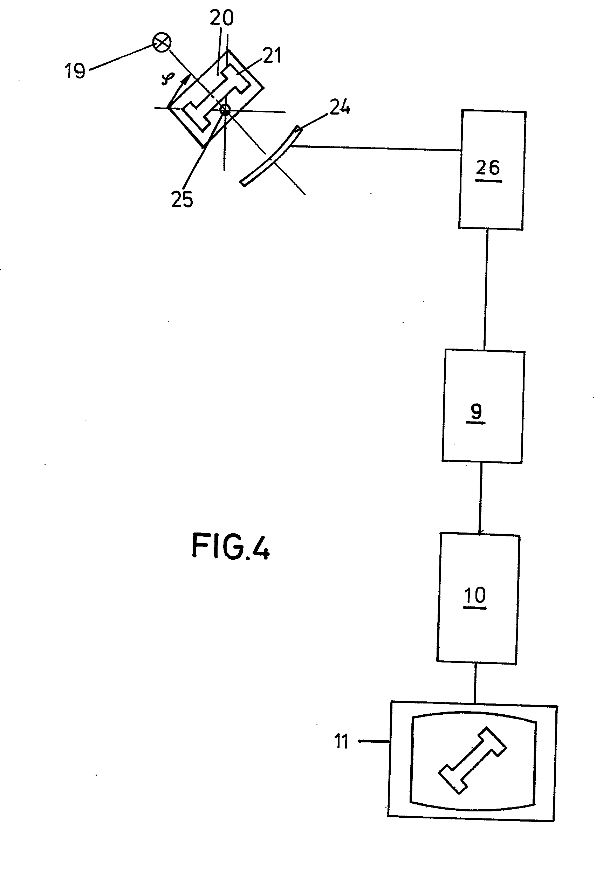

Gemäß der Darstellung in Fig. 4 ist es auch möglich, einen streifenhaft ortsauflösenden Strahlungsdetektor 24 und die Strahlungsquelle 19 in einer durch die Strahlungsquelle und den Strahlungsdetektor aufgespannten Ebene um eine dazu senkrechte Achse 25 relativ zum Objekt 21 z.B. mittels eines drehbaren Objektträgers 20 zu drehen. Bei jedem Drehwinkel $\vartheta$ wird die Ortsverteilung der Strahlungsintensität mit Hilfe der Auswerteelektronik 26 ermittelt. Auf diese Weise werden in einer dünnen Schicht, die durch die erwähnte, von der Strahlungsquelle und dem Strahlungsdetektor aufgespannte Ebene bestimmt wird, eine Vielzahl von Messungen in verschiedenen Winkelpositionen durchgeführt und dabei jweils eine lineare Durchstrahlungsprojektion ermittelt. In einem Elektronenrechner 9 werden diese verschiedenen Projektionen durch Logarithmierung, Faltungen und Entfaltungen in der aus der Computer-Tomographie bekannten Weise zur Erzeugung eines Schichtbildes der Probe verarbeitet und anschließend in der erwähnten Weise auf einem Monitor dargestellt oder abgespeichert.

Dr. Kurt Sauerwein, Bergische Straße 16, 5657 Haan 1

"Durchstrahlungsverfahren und -vorrichtung zum Materialprüfen"

Patentansprüche:

1. Durchstrahlungsverfahren zum Materialprüfen insbesondere mit energiereichen Strahlen, g e k e n n -
z e i c h n e t   d u r c h die Verwendung ortsauflösender Strahlungsdetektoren.

2. Verfahren nach Anspruch 1, d a d u r c h   g e -
k e n n z e i c h n e t , daß ein entlang einer Koordinate einer durchstrahlten Fläche eines Objektes
streifenhaft ortsauflösender Strahlungsdetektor und
das Objekt relativ zueinander in der anderen Koordinatenrichtung   verschoben werden.

3. Verfahren nach Anspruch 1, d a d u r c h   g e -
k e n n z e i c h n e t , daß beide Koordinatenrichtungen einer durchstrahlten Fläche gleichzeitig von
einem zweidimensional ortsauflösenden Detektor aufgenommen werden.

4. Verfahren nach einem oder mehreren der Ansprüche 1
bis 3, g e k e n n z e i c h n e t   d u r c h eine
bildliche Darstellung der Strahlungsdetektorsignale.

5. Verfahren nach einem oder mehreren der Ansprüche 1
bis 4, d a d u r c h   g e k e n n z e i c h n e t ,
daß die Durchstrahlungsprüfung in mehreren Richtungen
einer Ebene des Objektes erfolgt und die Strahlungsdetektorsinale gemäß der Computer-Tomographie-Methode ausgewertet werden.

6. Vorrichtung zum Durchführen des Verfahrens nach Anspruch 1, g e k e n n z e i c h n e t d u r c h einen im Strahlengang einer Strahlungsquelle (19) hinter einem zu durchstrahlenden Objekt (21) angeordneten ortsauflösenden Strahlungsdetektor (22) mit nachgeschalteter Auswerteelektronik (5, 17, 18, 26) und Datenverarbeitung (6 bis 11, 23).

7. Vorrichtung nach Anspruch 6, g e k e n n z e i c h - n e t d u r c h einen relativ zu einer aus der Strahlungsquelle (19) und dem Strahlungsdetektor (24) bestehenden Einheit in einer den Strahlengang einschließenden Ebene drehbaren Objektträger (20).

8. Vorrichtung nach Anspruch 6, d a d u r c h g e - k e n n z e i c h n e t, daß das Objekt (21) und der Strahlungsdetektor (22) relativ zueinander translatorisch bewegbar sind.

0098398

FIG.1

FIG.2

FIG.3

0098398

FIG.4